# EUROPÄISCHE PATENTSCHRIFT

(11) **EP 1 409 241 B1**
(45) Veröffentlichungstag und Bekanntmachung des Hinweises auf die Patenterteilung: **23.08.2006**
(21) Anmeldenummer: 02743230.1
(22) Anmeldetag: 19.06.2002
(51) Int. Cl.: B32B 5/18

(54) **OBERFLÄCHENBESCHICHTUNG VON AKUSTISCH WIRKSAMEN SCHAUMSTOFFMATERIALIEN**
SURFACE COVERING MADE OF FOAMED MATERIAL HAVING AN ACOUSTIC EFFECT
REVETEMENT DE SURFACE DE MATIERES EN MOUSSE SYNTHETIQUE A EFFET ACOUSTIQUE

(30) Priorität: 21.06.2001 DE 10129858
(43) Veröffentlichungstag der Anmeldung: 21.04.2004
(73) Patentinhaber: HP-CHEMIE PELZER RESEARCH & DEVELOPMENT Ltd., Waterford, County Waterford (IE)
(72) Erfinder: JANZEN, Stefan, 46325 Borken (DE)
(74) Vertreter: Jönsson, Hans-Peter
(86) Internationale Anmeldenummer: PCT/EP2002/006795
(87) Internationale Veröffentlichungsnummer: WO 2003/000488

(56) Entgegenhaltungen:
- GB-A- 1 152 742
- US-A- 3 563 845
- US-A- 3 894 165
- US-A- 4 139 613
- US-A- 5 472 541

## Beschreibung

Gegenstand der Erfindung ist ein Verfahren zur Oberflächenbeschichtung von akustisch wirksamen Schaumstoffmaterialien, ein entsprechendes Schaumstoffmaterial, das nach dem Verfahren erhältlich ist sowie die Verwendung des Schaumstoffmaterials.

Die Oberfläche akustisch wirksamer Materialien (Dämmstoffe oder Isolationsmaterialien) zur Herstellung von Isolationen beispielsweise im Automobil- wie auch im Baubereich, insbesondere Schaumstoffe und Faservliese muss häufig aus verschiedenen Gründen (Stabilität, Schutz, optische Gründe etc.) abgedeckt werden; hierzu werden im Stand der Technik beispielsweise poröse textile Flächengebilde wie Abdeckvliese oder Gewebe verwendet.

DE 197 34 532 A1 betrifft ein Dämmelement in Verbundausführung und ein Verfahren zu seiner Herstellung. Es wird ein Dämmelement in Verbundausführung mit einer aus Mineralwolle lamellierten Schicht beschrieben, deren Faserverlauf entgegen der Richtung der großen Achsen des Elements senkrecht orientiert gestellt ist und ein Verfahren zu seiner Herstellung, wobei die Aufgabe zugrunde liegt, ein Herstellungsverfahren und ein Dämmelement zu schaffen, das neben einer vielseitigen Verwendbarkeit umfassende statische Voraussetzungen, wie Festigkeitseigenschaften, eine große Formstabilität, gute .Schallschutzeigenschaften sowie erhöhte Widerstandsfähigkeiten gegen thermische und witterungsbedingte Belastungen aufweisen soll. Die Aufgabe wird gelöst durch ein Dämmelement, dessen lamellierte, senkrecht im Faserverlauf orientiert ausgebildete Schicht, ein- oder mehrfach ausgeführt, mit Schichten eines gleichen Materials, abweichenden Faserverlaufs oder eines anderen strukturierten Materials in Verbindung gebracht ist, wobei der Schichtenaufbau des Elementes, im Element sich ein- oder mehrfach wiederholend, angeordnet ist. Das Verfahren kennzeichnet sich dadurch, dass das zugeführte Faservlies mehrschichtig in die zuführende Transporteinrichtung eingeleitet und in der Einrichtung geführt, dem Scheitelpunkt entgegenbewegt wird und die abgetrennten Lamellen der zusammengeführten Schichtanordnungen, in der Anzahl sowie Materialzusammensetzung der Schichten entsprechende stegartige Lamellengruppen bildet.

DE 197 34 943 A1 betrifft ein Verfahren zur Herstellung eines Verkleidungselements mit Dämmeigenschaften und einer profilierten Oberfläche. Beschrieben wird ein Verfahren zur Herstellung eines Verkleidungselements mit Dämmeigenschaften und einer profilierten Oberfläche, dessen aus einem Fasermaterial, insbesondere aus Mineralwolle bestehender Grundkörper einen zur großen Oberfläche senkrecht orientierten Faserverlauf aufweist und einen ein- oder mehrschichtigen Aufbau hat.

Es liegt dabei die Aufgabe zugrunde, Verkleidungs- und Dämmelemente mit hoher Produktivität herzustellen, die große Gebrauchswerteigenschaften, wie Formstabilität, Biegesteifigkeit bei hervorragenden Dämmeigenschaften aufweisen. Die Aufgabe wird dadurch gelöst, dass das Oberflächenprofil eines Verkleidungs- und Dämmelements mittels eines, senkrecht auf die aufrecht zu profilierenden Oberfläche stehenden Fasern gerichteten Drucks, ohne einen eigenen Zusatz von Formstabilisatoren sowie Flüssigkeiten trocken geprägt wird, wobei die in konkav geprägten Bereichen des Profils, dem Druck des Prägewerkzeuges ausgesetzten Fasern und Faserbereiche, an der Oberfläche gebrochen und/oder irreversibel verformt werden.

DE 36 29 222 A1 betrifft ein Verfahren zum Herstellen eines Verkleidungsteils sowie ein danach hergestelltes Verkleidungsteil. Beschrieben wird insbesondere ein Verfahren, beim dem ein ein- oder mehrlagiger Faserstoff mit einem vorzugsweise aus modifiziertem Polyesterharz oder dergleichen bestehenden Bindemittel beschichtet, einseitig mit einem Schaumstoffplatte belegt, mit einem Faservlies abgedeckt und in einer Formpresse zusammengepresst wird, wobei als Faserstoffmaterial ein Glasfaser-Wirrvlies aus Feinst-Glasfasern verwendet wird.

In der US-A-4,169,184 wird die Herstellung eines Klebebandes aus hochdichtem, flexiblem, offenzelligem PU-Schaum, durchgehend imprägniert mit einem chlorhaltigen Elastomer und beschichtet mit Haftkleber beschrieben. Hier wird nicht die Oberfläche beschichtet sondern durchtränkt.

Die GB 1 029 407 A betrifft die Herstellung eines Schaumstoffdichtungsmaterials und Imprägnierung mittels Durchtränkung (bei 90 % Stauchung und anschließender Entspannung) zur Erhöhung der Medienbeständigkeit. Auch hier wird keine Beschichtung, sondern eine Durchtränkung der Oberfläche beschrieben.

In der GB 984 300 A wird die PU-Schaum-Durchtränkung mit Isocyanaten zur Herstellung von harten, offenzelligen Schäumen und Erhöhung der Medienbeständigkeit beschrieben. Analog dem obengenannten Stand der Technik wird auch hier keine Beschichtung, sondern eine Durchtränkung der Oberfläche beschrieben.

DE 693 08 608 T2 betrifft ein Verfahren und eine Vorrichtung zur Herstellung eines beschichteten Fasergebildes. In einem ersten Schritt wird eine geschäumte oder zum Schäumen gebrachte vernetzbare elastomere wässrige Emulsionsbeschichtung-Zusammensetzung auf die Fläche eines Faservlieses aufgebracht unter Bildung einer Beschichtung.

In einem zweiten Schritt erfolgt ein enges Anschmiegen einer heißen glatten Bügelfläche an die Beschichtung um die Beschichtung zu trocknen und zusammenzupressen und um einen gehärteten glatten Oberflächenfilm über dem exponierten Bereich der Beschichtung zu entwickeln. Anschließend wird die Bügelfläche aus der Anschmiegung an die Beschichtung gelöst und das Vlies der Beschichtung erhitzt, bis die Beschichtung trocken und gehärtet ist. In einem weiteren Schritt gewinnt man dann das Vlies, das eine glatte zähe elastomere Vernetzungsbeschichtung auf einer Fläche des Vlieses aufweisen soll.

Demgegenüber besteht die Aufgabe der vorliegenden Erfindung insbesondere darin, ein verbessertes Verfahren zur Oberflächenbeschichtung von akustisch wirksamen Schaumstoffmaterialien zur Verfügung zu stellen. Eine weitere Aufgabe der vorliegenden Erfindung besteht insbesondere in der Bereitstellung von oberflächenbeschichteten Schaumstoffmaterialien, die eine gute Formsteifigkeit, einen geringen Strömungswiderstand und einen möglichst freie Farbwahl der Oberflächenbeschichtung gewährleistet.

In einer ersten Ausführungsform der vorliegenden Erfindung wird die vorgenannte Aufgabe gelöst durch ein Verfahren zur Oberflächenbeschichtung von akustisch wirksamen Schaumstoffmaterialien wie im Anspruch 1 definiert, wobei man eine Beschichtung mittels Rakel, Walze, Schaum oder im Reverse-Verfahren bei gleichzeitiger Stauchung des Schaumstoffmaterials durch das Auftragwerkzeug flächig aufträgt und nach Rückstellen des Schaumstoffmaterials die Beschichtung aushärtet und man eine Verformung des Schaumstoffmaterials vor der Härtung der Beschichtung vornimmt.

Der erfindungsgemäßen Beschichtung liegt zugrunde, die Oberfläche solcher Materialien, nämlich Schaumstoffe, aber prinzipiell auch Fasermaterialien mit einer ebenfalls porösen aber gleichzeitig festen Schicht zu bedecken, wobei man durch die Wahl der Beschichtung hinsichtlich der angestrebten Oberflächen- Eigenschaften durch die Wahl der Beschichtungsmaterial-Inhaltsstoffe sehr variabel ist. Ein Vorteil erfindungsgemäßer Beschichtungen ist die Konzentration der gewünschten Eigenschaften (wie beispielsweise Medienbeständigkeit und/oder Flammschutz) an der Oberfläche des Bauteils und nicht im gesamten Volumen des Bauteils, was die Einsatzmenge der Zuschlagstoffe stark reduziert.

Besonders bevorzugt weist die Beschichtung die nachfolgenden Eigenschaften auf:
- Versteifung der Deckschichten von flexiblen Materialien zur Erhöhung der Biegesteifigkeit und Druckfestigkeit; die gewünschte Festigkeit und/oder Flexibilität kann je nach Erfordernis eingestellt werden;
- Dauerhafte Formstabilität bei beschichteten und nachträglich verformten Teilen durch Einsatz von duroplastischen Bindemitteln in der Deckschicht;
- Akustisch wirksam (offen) durch offene Struktur bedingt durch die Beschichtungsmasseninhaltsstoffe und das Auftragsverfahren;
- Freie Farbwahl durch Einbringen verschiedener Pigmente und Füllstoffe;
- Die mechanischen und akustischen Eigenschaften sind variierbar durch entsprechende Rezepturanpassungen, beispielsweise durch die Zugabe von Fasern und anderen Füllstoffen und Bindemitteln zu der Beschichtungsmasse;
- Durch die Wahl der entsprechenden Beschichtungsmasseninhaltsstoffe können zusätzliche Produktoberflächenmerkmale eingestellt werden, so beispielsweise Hydrophobie, Oleophobie, bestimmte Medienbeständigkeiten oder Flammschutz.

Das zu beschichtende Schaumstoffmaterial wird mit einer Masse unter einem Anpressdruck flächig beschichtet, getrocknet und, falls erforderlich, anschließend bei den entsprechenden Bedingungen (Temperatur / Druck) verformt.

Die Beschichtungsmasse besteht beispielsweise aus Bindemitteln, insbesondere duroplastischer Art, wie Melaminharzen und variablen Anteilen an Zuschlagstoffen, wie beispielsweise Füllstoffe, Pigmente, Fasern, Verdickungsmittel, Flammschutzmittel, Hydrophobierungs- und/oder Oleophobierungsmittel in wässriger Lösung bzw. Dispersion. Ein Vorteil von Melaminharzen als Bindemittel ist die bereits sehr stark ausgeprägte Flammwidrigkeit dieser Materialien.

Abhängig vom Auftragverfahren werden gegebenenfalls unterschiedliche weitere Hilfsstoffe, wie Schäumungsmittel oder Verdickungsmittel verwendet.

Der Auftrag der Beschichtung kann mit den üblichen und bekannten Verfahren, wie beispielsweise Rakelauftrag, Walzenauftrag, Schaumauftrag oder im Reverse- Verfahren erfolgen, wobei die Rezeptur entsprechend angepasst werden sollte. Erfindungsgemäß hat sich gezeigt, daß eine stark offene, poröse Oberfläche durch einen leichten Druck des Auftragwerkzeugs auf die Oberfläche des Beschichtungsgutes bei der Beschichtung mit einer eingedickten Beschichtungsmasse erreicht wird. Denkbar ist auch der Auftrag einer stabilisierten Schaumschicht, wobei die Schaumstruktur auch nach Trocknung und Fixierung zur Erhaltung der Offenporigkeit erhalten bleiben soll.

Die Trocknung erfolgt zunächst bei Temperaturen unterhalb der Vernetzungstemperatur des jeweiligen Bindemittels, es sei denn, es werden nicht weiter verformte Planteile gewünscht, so daß gleich getrocknet und kondensiert werden kann.

Die Herstellung von Formteilen erfolgt gegebenenfalls bei den dem Bindemittel bzw. den sonstigen Zuschlagstoffen entsprechenden Temperaturen und Zeiten in einem Verformwerkzeug.

Die erfindungsgemäßen Schaumstoffmaterialien können im Baubereich, beispielsweise für Akustikdecken oder -wände oder im Automotive-Sektor als Deckvlies-Ersatz an geeigneten akustisch wirksamen Bauteilen eingesetzt werden.

Besonders bevorzugt im Sinne der vorliegenden Erfindung wird als Schaumstoffmaterial ein halbharter, offenzelliger Schaumstoff eingesetzt. Der Begriff des "halbharten Leichtschaums" im Sinne der vorliegenden Erfindung umfasst insbesondere solche mit einer Stauchhärte im Bereich von 20 bis 40 kPa, insbesondere 25 bis 25 kPa und/oder einem Raumgewicht von 10 bis 25 kg/m³.

Die Stauchhärte eines Schaumstoffs charakterisiert als eines von mehreren messbaren Qualitätskriterien die Komforteigenschaften des Materials.

Die Prüfung der Stauchhärte erfolgt üblicherweise mit einem genormten Prüfkörper von 100 x 100 x 50 mm, der zunächst drei Mal vorgestaucht wird, bevor im vierten Stauchungszyklus bei 40 % Zusammendrückung die Messung der Stauchhärte erfolgt.

Ein Kraftverformungsdiagramm bildet die unterschiedliche Stauchhärte bei variierter Stauchung vorzugsweise zwischen 10 bis 55 % ab. Dabei zeigt sich, dass die Entlastungskurve unterhalb der Belastungskurve verläuft, weil bei der Entspannung des Schaumstoffs nur noch ein Teil der Kraft frei wird, die vorher zur Belastung aufgewendet wurde.

Die innere Energieaufnahme des Schaumstoffs ist ein Maß für die Elastizität. Je größer der Unterschied zwischen Belastungs- und Entlastungs-Stauchhärte ist, um so größer ist die Elastizität.

Wenn im Sinne der vorliegenden Erfindung von halbharten Leichtschäumen die Rede ist, so werden hier insbesondere solche mit einem Raumgewicht von 12 bis 17 kg/m³ verstanden. Dieses Raumgewicht kann beispielsweise nach DIN 53420 oder ISO 845 gemessen werden.

In einer besonderen Ausführungsform der vorliegenden Erfindung wird als Material des Schaumstoffs ein Polyurethanschaum eingesetzt. Darüber hinaus kann jedoch jedes beliebige andere Schaumstoffmaterial erfindungsgemäß eingesetzt werden.

Besonders bevorzugt im Sinne der vorliegenden Erfindung setzt man als Beschichtung eine Melaminharz-Lösung oder Lösungen sowie Dispersionen von Phenolharzen, Polyurethanen oder Acrylaten ein, die gegebenenfalls Füllstoffe, Fasern, Bindemittel, Flammschutzmittel, Flexibilisierungsmittel, Hydrophobierungsmittel, Oleophobierungsmittel, Farbstoffe, Pigmente, Schäumungsmittel, Emulgatoren und/oder Verdickungsmittel enthält. Alternativ zu den Lösungen und/oder Dispersionen können auch Polyurethanschaumstoffe aufgebracht werden.

Das erfindungsgemäße Verfahren ist insbesondere durch einen Anpressdruck des Auftragwerkzeugs gekennzeichnet. Dieser Anpressdruck wird beispielsweise dadurch bestimmt, dass man die Stauchung des Schaumstoffmaterials mit dem Auftragwerkzeug in einem Bereich von 5 bis 30 %, insbesondere 5 bis 10 % der Dicke des Schaumstoffmaterials einstellt.

Die Härtung der erfindungsgemäß aufgebrachten Beschichtung, insbesondere einer duroplastischen Beschichtung wird vorzugsweise in einem Temperaturbereich oberhalb von 100 °C, insbesondere bei einer Temperatur oberhalb von 140 °C vorgenommen.

Besonders bevorzugt im Sinne der vorliegenden Erfindung wird eine Verformung des Schaumstoffmaterials vor der Aushärtung der Beschichtung vorgenommen. Dies gilt um so mehr für duroplastische Beschichtungsmaterialien, die als Träger des Schaumstoffmaterials dienen.

Eine weitere Ausführungsform der vorliegenden Erfindung umfasst das mit einer Oberflächenbeschichtung versehene Schaumstoffmaterial, das nach dem obengenannten Verfahren erhältlich ist.

Bedingt durch den Beschichtungsauftrag erhöht sich das Flächengewicht des Schaumstoffmaterials um die Masse der Beschichtung. Dementsprechend ist das erfindungsgemäß beschichtete Schaumstoffmaterial vorzugsweise dadurch gekennzeichnet, dass es bei einseitiger Beschichtung eine Flächengewichtserhöhung von 20 bis 1.000 g/m², insbesondere 100 bis 300 g/m² aufweist.

Ein wesentliches Ziel der vorliegenden Erfindung ist es, Schaumstoffmaterial zur Verfügung zu stellen, das hervorragende akustische Eigenschaften aufweist. Der Strömungswiderstand ist bekanntermaßen eine Kenngröße für ein poröses Schallabsorptionsmaterial. Die schallabsorbierenden Eigenschaften eines porösen Materials hängen von dessen Strömungswiderstand ab. Besonders bevorzugt im Sinne der vorliegenden Erfindung weist das unbeschichtete Schaumstoffmaterial einen Strömungswiderstand nach DIN 52213 von 200 bis 10.000 Ns/m³, insbesondere 500 bis 5.000 Ns/m³ auf. Der Strömungswiderstand des beschichteten Schaumstoffmaterials sollte in derselben Größenordnung liegen.

Eine weitere Ausführungsform der vorliegenden Erfindung besteht in der Verwendung der obengenannten Schaumstoffmaterialien zur Herstellung von Akustikdecken im Baubereich oder als Deckvliesersatz in akustisch wirksamen Bauteilen des Automotive-Bereichs.

### Beispiel 1:

Beschichtet wurde ein halbharter, offenzelliger PUR-Leichtschaum mit dem Raumgewicht von etwa 16 kg/m³. Die beispielhafte Beschichtungsmasse war folgendermaßen zusammengesetzt:
■ Melaminharzlösung (30 % Madurit® MW396, Solutia GmbH in Wasser) 66 %
■ Abtönfarbe (Faust Vollton-Abtönfarbe schwarz) 22 %
■ Acryldispersion (gebrauchsfertige Mischung Fa. Vegro, Kirschau) 11 %
■ Verdickungsmittel (Raniegel® NK24D) 1 %

Platten mit dem Format DIN A4 und einer Stärke von 20 mm wurden mit der Beschichtungsmasse mittels Spachtel beschichtet und unter leichtem Anpressdruck bearbeitet. Trocknung und Vernetzung erfolgten im UmluftTrockenschrank bei 150 °C. Die entsprechenden Auflagemassen sind in Tabelle 1 angegeben.

Die Bestimmung der Porösität erfolgte mittels Differenzdruckmessgerät der Fa. Schmohl, Eislingen (basierend auf der Durchströmung des Messgutes mit Druckluft und Bestimmung des Strömungswiderstandes in mbar) an jeweils 4 Punkten der Probekörper vor und nach der Beschichtung. Auch hier sind die Daten in Tabelle 1 angegeben.

### Beispiel 2:

Analog Beispiel 1 wurden dieselben Platten mit einer unterschiedlichen Massenauflage versehen. Die Werte sind in der Tabelle 1 wiedergegeben.

### Vergleichsbeispiel 1:

Analog Beispiel 1 wurde eine einseitig mit einem Deckvlies (Libeltex 0114214010, 120 g/m²) beschichtete Platte mit der Format DIN A4 und einer Stärke von 20 mm mit dem Deckvlies belegt. Die Tabelle 1 gibt die erhaltenen Daten wieder.

### Vergleichsbeispiel 2:

Analog Beispiel 1 wurde mit einer Rakel nur oberflächlich ohne nennenswerten Anpressdruck aufgetragen. Die Ergebnisse sind in der Tabelle 1 wiedergegeben.

### Beispiel 3:

Analog Beispiel 1 wurde mittels Rakel und erhöhtem Anpressdruck und einem Winkel von etwa 45° in Fahrtrichtung des Auftragwerkzeuges aufgetragen. Der Anpressdruck erzeugte auch hier einen Materialstauchung von ca. 2 mm. Die Tabelle 1 gibt die erhaltenen Daten wieder.

**Tabelle 1: Strömungswiderstand**

| Beispiel | Masse Auflage [g] | Unbeschichtet mbar | Mittelwert unbeschicht et mbar | Beschichtet mbar | Mittelwert beschicht et mbar |
|---|---|---|---|---|---|
| 1 | 11,7 | 250/225/340/3 25 | 285 | 160/165/160/2 20 | 176 |
| 2 | 10,9 | 22/260/250/29 0 | 255 | 170/130/210/2 90 | 200 |
| 3 | 13.4 | 245/240/200/2 30 | 229 | 195/440/315/2 80 | 307 |
| Vgl. 1 | Deckvlies | 370/230/325/2 20 | 286 | 420/265/390/2 80 | 339 |
| Vgl. 2 | 13,51 | 220/210/245/2 30 | 226 | 330/450/370/5 30 | 420 |

## Patentansprüche

1. Verfahren zur Oberflächenbeschichtung von akustisch wirksamen Schaumstoffmaterialien, **dadurch gekennzeichnet, dass** man eine einseitige Beschichtung des Schaumstoffmaterials mittels Rakel, Walze, Schaum oder im Reverse-Verfahren bei gleichzeitiger Stauchung des Schaumstoffmaterials durch das Auftragwerkzeug flächig aufträgt und nach Rückstellen des Schaumstoffmaterials die Beschichtung aushärtet, wobei als Schaumstoffmaterial ein halbharter offenzelliger Leichtschaum mit einer Stauchhärte im Bereich von 20 bis 40 kPa und einem Raumgewicht von 10 bis 25 kg/m³ eingesetzt wird und man eine Verformung des Schaumstoffmaterials vor der Härtung der Beschichtung vornimmt.

2. Verfahren nach Anspruch 1, **dadurch gekennzeichnet, dass** man als Schaumstoffmaterial einen halbharten offenzelligen Leichtschaum mit einer Stauchhärte im Bereich von 25 kPa und/oder einem Raumgewicht von 12 bis 17 kg/m³ einsetzt.

3. Verfahren nach Anspruch 1 oder 2, **dadurch gekennzeichnet, dass** man als Schaumstoffmaterial einen Polyurethan-Schaum einsetzt.

4. Verfahren nach einem der Ansprüche 1 bis 3, **dadurch gekennzeichnet, dass** man als Beschichtungsmittel Duroplaste, die gegebenenfalls Füllstoffe, Fasern, Bindemitteln, Flammschutzmittel, Flexibilisierungsmittel, Hydrophobierungsmittel, Oleophobierungsmittel, Farbstoffe, Pigmente, Schäumungsmittel, Emulgatoren und/oder Verdickungsmittel enthalten, einsetzt.

5. Verfahren nach einem der Ansprüche 1 bis 4, **dadurch gekennzeichnet, dass** man als Beschichtungsmittel Melaminharze, Phenolharze, Polyurethanharze und/oder Acrylatharze einsetzt.

6. Verfahren nach einem der Ansprüche 1 bis 5, **dadurch gekennzeichnet, dass** man die Stauchung des Schaumstoffmaterials mit dem Auftragswerkzeug auf einen Bereich von 5 bis 30 %, insbesondere 5 bis 10 % der Dicke des Schaumstoffmaterials einstellt.

7. Verfahren nach einem der Ansprüche 1 bis 6, **dadurch gekennzeichnet, dass** man die Härtung, insbesondere die Vernetzung der Beschichtung bei einer Temperatur oberhalb von 100 °C, insbesondere bei einer Temperatur oberhalb von 140 °C vornimmt.

8. Mit einer einzelnen Oberflächenbeschichtung versehenes Schaumstoffmaterial, erhältlich nach einem Verfahren der Ansprüche 1 bis 7.

9. Schaumstoffmaterial nach Anspruch 8, **dadurch gekennzeichnet**, das es ein Flächengewicht der Beschichtung bei einseitigem Auftrag von 20 bis 1.000 g/m², insbesondere 100 bis 300 g/m² aufweist.

10. Verwendung von Schaumstoffmaterial nach Anspruch 8 oder 9 zur Herstellung von Akustikdecken im Baubereich oder als Deckvlies-Ersatz in akustisch wirksamen Bauteilen des Fahrzeug-Bereichs, insbesondere Kraftfahrzeugbereichs.

## Claims

1. A method for the surface coating of acoustically active foam materials, **characterized in that** a coating of the foam material is applied two-dimensionally on one side by means of a knife, roll, foam or reverse method while the foam material is being compressed by the coating tool, and the coating is cured after the restoring of the foam material, wherein a semi-rigid open-pore light-weight foam having a compression stress within a range of from 20 to 40 kPa and a bulk density of from 10 to 25 kg/m³ is employed as said foam material, and a deformation of the foam material is effected before the coating has cured.

2. The method according to claim 1, **characterized in that** a semi-rigid open-pore light-weight foam having a compression stress within a range of 25 kPa and/or a bulk density of from 12 to 17 kg/m³ is employed as said foam material.

3. The method according to claim 1 or 2, **characterized in that** a polyurethane foam is employed as the foam material.

4. The method according to any of claims 1 to 3, **characterized in that** thermosetting plastics which optionally contain fillers, fibers, binders, flame protectants, flexibilizers, hydrophobizing agents, oleophobizing agents, dyes, pigments, foaming agents, emulsifiers and/or thickeners are employed as the coating agent.

5. The method according to any of claims 1 to 4, **characterized in that** melamine resins, phenol resins, polyurethane resins and/or acrylate resins are employed as the coating agent.

6. The method according to any of claims 1 to 5, **characterized in that** the compression of the foam material is adjusted with the application tool to within a range of from 5 to 30%, especially from 5 to 10%, of the thickness of the foam material.

7. The method according to any of claims 1 to 6, **characterized in that** the curing, especially the cross-linking of the coating, is effected at a temperature above 100 °C, especially at a temperature above 140 °C.

8. A foam material provided with a single surface coating, obtainable by a method according to claims 1 to 7.

9. The foam material according to claim 8, **characterized by** having a basis weight of the coating of from 20 to 1000 g/m², especially from 100 to 300 g/m².

10. Use of the foam material according to claim 8 or 9 for the preparation of acoustic ceilings in the constructional field or as a cover web substitute in acoustically active building parts in the vehicle field, especially automotive field.

## Revendications

1. Procédé de revêtement de surfaces de matériaux de type mousse à effet acoustique, **caractérisé en ce que** l'on dépose à plat un revêtement sur un seul côté du matériau mousse, à l'aide d'une râcle ou d'un rouleau ou par moussage ou par procédé inversé, tout en comprimant le matériau mousse avec l'outil de dépôt, et l'on fait durcir le revêtement après reprise élastique du matériau mousse, le matériau mousse employé étant une mousse légère et semi-dure à alvéoles ouvertes qui présente une résistance à la compression de 20 à 40 kPa et une masse volumique de 10 à 25 kg/m³, et l'on façonne le matériau mousse avant de faire durcir le revêtement.

2. Procédé conforme à la revendication 1, **caractérisé en ce que** l'on emploie comme matériau mousse une mousse légère et semi-dure à alvéoles ouvertes qui présente une résistance à la compression de 25 kPa et une masse volumique de 12 à 17 kg/m³.

3. Procédé conforme à la revendication 1 ou 2, **caractérisé en ce que** l'on emploie comme matériau mousse une mousse de polyuréthane.

4. Procédé conforme à l'une des revendications 1 à 3, **caractérisé en ce que** l'on emploie comme matériau de revêtement une matière plastique thermodurcissable, qui peut éventuellement contenir des charges, des fibres, des liants, un agent ignifuge, un agent assouplissant, un agent hydrofuge, un agent oléofuge, des colorants, des pigments, un agent de moussage, des émulsifiants et/ou un agent épaississant.

5. Procédé conforme à l'une des revendications 1 à 4, **caractérisé en ce que** l'on emploie comme matériau de revêtement une résine de mélamine, une résine phénolique, une résine polyurétane ou une résine acrylique.

6. Procédé conforme à l'une des revendications 1 à 5, **caractérisé en ce que** l'on règle la compression du matériau mousse par l'outil de dépôt à une valeur située dans l'intervalle de 5 à 30 % et en particulier de 5 à 10 % de l'épaisseur du matériau mousse.

7. Procédé conforme à l'une des revendications 1 à 6, **caractérisé en ce que** l'on effectue le durcissement, en particulier la réticulation du revêtement, à une température supérieure à 100 °C, et en particulier à une température supérieure à 140 °C.

8. Matériau mousse muni d'un revêtement de surface unilatéral, accessible par un procédé conforme à l'une des revendications 1 à 7.

9. Matériau mousse conforme à la revendication 8, **caractérisé en ce** le poids surfacique du revêtement unilatéral vaut de 20 à 1000 g/m², et en particulier de 100 à 300 g/m².

10. Emploi d'un matériau mousse conforme à la revendication 8 ou 9 en vue de la fabrication de plafonds acoustiques pour le bâtiment, ou comme substitut des voiles d'habillage dans des pièces à effet acoustique pour véhicules, en particulier pour véhicules automobiles.
